# FASCICULE DE BREVET EUROPEEN

(11) **EP 0 696 769 B1**
(45) Date de publication et mention de la délivrance du brevet: **14.01.1998**
(21) Numéro de dépôt: 95401858.6
(22) Date de dépôt: 08.08.1995
(51) Int. Cl.: G05D 23/19

(54) **Installation de gestion d'énergie et de contrôle d'accès d'un local**
Energieverwaltungs- und Zugangskontrollvorrichtung für einen Raum
Energy management and access control arrangement for a room

(30) Priorité: 10.08.1994 FR 9409906
(43) Date de publication de la demande: 14.02.1996
(73) Titulaire: Société Française d'Etudes Electroniques Systèmes ( SF2E Systèmes), 78320 Le Mesnil Saint Denis (FR)
(72) Inventeur: Coelho, Jean-Louis, F-78860 Saint nom la Breteche (FR); Marteau, Jean-Noel, F-78160 Marly le Roi (FR)
(74) Mandataire: CABINET BONNET-THIRION

(56) Documents cités:
- EP-A- 0 200 635
- US-A- 4 058 740
- US-A- 4 223 301
- US-A- 4 801 082
- ELEKTROTECHNIK, vol. 71, no. 7, 13 Octobre 1989 WURZBURG DE, pages 53-55, 'Raumbus versorgt und informiert'
- SIEMENS POWER ENGINEERING & AUTOMATION, vol. 8, no. 2, 1986 BERLIN DE, pages 100-101, B. SCHADE 'Infrared remote controlled air conditioners offer greater comfort'

## Description

L'invention concerne la climatisation d'un local comme par exemple une chambre d'hôtel; elle a plus particulièrement pour objet de combiner le contrôle d'accès et une gestion d'énergie, en particulier la climatisation en fonction d'un certain nombre de paramètres et notamment d'un paramètre représentatif de l'occupation effective du local par un occupant légitime.

Le brevet américain N° 4 319 712 décrit un système de commande d'un conditionneur d'air piloté par la détection de la présence d'une clé dans un boîtier spécifique prévu à l'intérieur d'un local à climatiser. L'exploitation d'un tel système présente des inconvénients car l'occupant peut oublier ou ne pas comprendre qu'il doit placer sa clé à un endroit spécifique pour mettre en route la climatisation. En outre, il s'écoule souvent un temps assez long avant que la pièce ne retrouve une température agréable.

Le document US-A-4 223 301 décrit une installation de gestion d'énergie dans un local, commandée, notamment, par un verrou intérieur. Le document EP-A-0 200 635 décrit une serrure à code d'accès commandant l'entrée d'un local.

L'invention apporte une solution aux problèmes évoqués ci-dessus.

Plus précisément, l'invention concerne donc une installation de contrôle d'accès et de gestion d'énergie dans un local comportant: une serrure commandant l'entrée dudit local, des moyens de climatisation dudit local, des moyens de commande de climatisation pilotant lesdits moyens de climatisation, des moyens de calcul d'un régime de fonctionnement pilotant lesdits moyens de commande et des moyens d'élaboration d'un signal ou code représentatif du fait que ladite serrure est verrouillée de l'intérieur, caractérisée en ce que ladite serrure est du type à code d'accès associée à des moyens de saisie de code accessibles de l'extérieur dudit local et susceptibles de piloter ladite serrure au moins à l'ouverture, en ce que lesdits moyens de calcul sont adaptés à placer lesdits moyens de commande dans un régime de fonctionnement sélectionné parmi au moins trois régimes prédéterminés dont un régime de fonctionnement nominal, en ce qu'une entrée de donnée desdits moyens de calculs est reliée auxdits moyens d'élaboration d'un signal ou code représentatif et en ce qu'une autre entrée de donnée desdits moyens de calcul est reliée auxdits moyens de saisie de code, ledit régime de fonctionnement nominal n'étant sélectionné que lorsque lesdits moyens d'élaboration délivrent ledit signal ou code représentatif.

Ainsi, le passage au régime de fonctionnement nominal de la climatisation est conditionné, notamment, par le fait que l'occupant verrouille la porte de l'intérieur. D'autres paramètres sont pris en compte pour déterminer un ou plusieurs autres régimes de fonctionnement, par exemple le fait que le local a ou non un occupant désigné, que son arrivée dans le local (s'il n'est pas présent) est probable ou non, etc...

L'invention sera mieux comprise et d'autres avantages de celle-ci apparaîtront plus clairement à la lumière de la description qui va suivre d'une installation de gestion de climatisation conforme à son principe, donnée uniquement à titre d'exemple et faite en référence aux dessins annexés dans lesquels:
- la figure 1 est un schéma-bloc d'une installation de gestion de la climatisation d'un local, conforme à l'invention; et
- la figure 2 est un graphe illustrant l'évolution de la température dans le local en fonction du régime de fonctionnement sélectionné des moyens de climatisation.

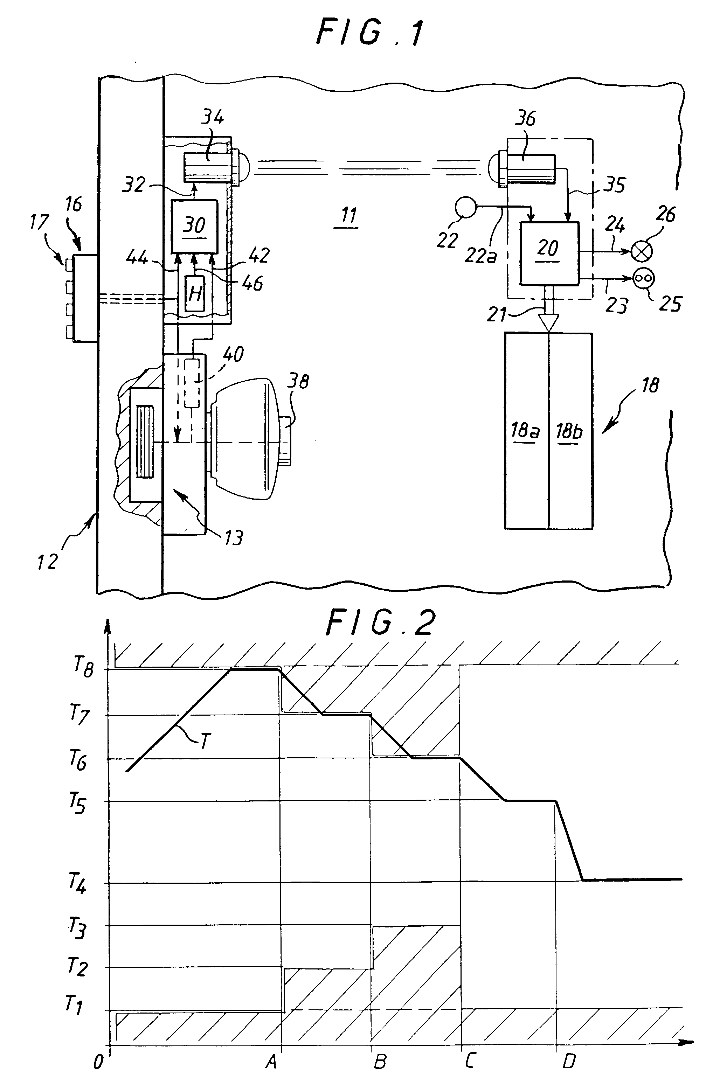

En se reportant plus particulièrement à la figure 1, on a représenté schématiquement une installation de gestion de la climatisation d'un local 11 (par exemple une chambre d'hôtel) dont l'accès est commandé par une porte 12 munie d'une serrure 13 à code d'accès, pilotée au moins à l'ouverture par des moyens de saisie de code 16 accessibles de l'extérieur du local et comportant ici un clavier 17 monté sur la face extérieure de la porte 12 où à proximité de celle-ci.

La sortie des moyens de saisie de code 16 est donc reliée pour piloter électriquement la serrure 13 à l'ouverture, selon un agencement connu en soi. Bien entendu, les moyens de saisie 16 pourraient comporter, en lieu et place du clavier, un dispositif formant lecteur de clé ou de carte. L'installation comporte en outre des moyens de climatisation 18 du local et des moyens de commande de climatisation 20, conçus pour placer les moyens de climatisation dans un régime de fonctionnement sélectionné parmi plusieurs régimes possibles prédéterminés. Parmi ces régimes de fonctionnement, figure notamment un régime de fonctionnement nominal, sélectionné lorsque le local est effectivement occupé par une personne habilitée à y séjourner. Les moyens de commande 20 comportent un circuit électronique à microprocesseur agencé avec plusieurs entrées de données et une sortie de commande 21 pilotant les moyens de climatisation. Dans l'exemple décrit, les moyens de climatisation 18 comprennent une unité de refroidissement 18a et une unité de chauffage 18b. La température ambiante est mesurée par une sonde de température 22 qui est connectée à une entrée de donnée 22a des moyens de commande 20. Par conséquent, en fonction de l'évolution de la température ambiante, les moyens de climatisation pourront être mis en oeuvre pour réchauffer ou refroidir le local de façon à maintenir ce dernier dans une plage de température donnée, cette plage dépendant d'un régime de fonctionnement sélectionné, comme on le verra plus loin. Avantageusement, les moyens de commande 20 comportent aussi des sorties de pilotage 23, 24, autorisant l'utilisation d'un réseau de distribution d'électricité 25 et d'un réseau d'éclairage électrique 26, spécifiques du local. De cette façon, les deux réseaux peuvent être déconnectés en fonction du régime de fonctionnement sélectionné des moyens de climatisation, notamment lorsque celui-ci n'est pas le régime de fonctionnement nominal. De plus, ce système peut aisément être installé dans un local existant puisqu'il ne nécessite aucun câblage supplémentaire.

L'installation comporte aussi des moyens de calcul 30 du régime de fonctionnement des moyens de climatisation. Ces moyens de calcul comportent un circuit électronique à microprocesseur agencé avec plusieurs entrées de données et une sortie 32 couplées audit moyen de commande 20. Les signaux délivrés à la sortie 32 sont représentatifs d'un régime de fonctionnement des moyens de climatisation, sélectionné selon des modalités qui seront indiquées plus loin.

Comme cela est visible sur la figure 1, les moyens de calcul dudit régime de fonctionnement sont placés près de l'entrée du local, c'est-à-dire près de la serrure 13, tandis que les moyens de commande de climatisation 20 sont placés à distance desdits moyens de calcul, de préférence près des moyens de climatisation 18. Dans l'exemple décrit, l'installation comporte des moyens de liaison infrarouge entre lesdits moyens de calcul et lesdits moyens de commande. Ainsi, la sortie 32 des moyens de calcul 30 est reliée à un émetteur infrarouge 34 tandis qu'une entrée de donnée 35 des moyens de commande 20 est reliée à un récepteur infrarouge 36 placé en regard de l'émetteur 34. De tels émetteurs et récepteurs infrarouges sont bien connus et couramment exploités dans les systèmes de télécommande des appareils audiovisuels. Ils sont associés à des codeurs et décodeurs aptes à appliquer à l'entrée 35 des moyens de commande 20, une information représentative du régime de fonctionnement sélectionné par les moyens de calcul 30. Le système de transmission à infrarouge pourrait être remplacé par un système haute-fréquence ou à courant porteur.

De plus, la serrure 13 est munie, d'une façon connue en soi, d'un bouton de commande de fermeture 38, manoeuvrable seulement de l'intérieur du local 11 et permettant de verrouiller la porte 12 de l'intérieur. Ce bouton est en outre associé à un transducteur électrique 40 ou analogue, délivrant un signal représentatif du fait que la serrure 13 est fermée de l'intérieur. La sortie de ce transducteur 40 est appliquée à une entrée de donnée 42 des moyens de calcul 30. Par ailleurs, la sortie des moyens de saisie de code 16 est connectée à une entrée de donnée 44 des moyens de calcul 30. Une autre entrée de donnée 46 des moyens de calcul 30 est reliée à une sortie numérique d'une horloge électronique H.

Un code particulier est affecté et confié à la personne qui occupe légitimement le local 11. Dans le cas d'une chambre d'hôtel, le client reçoit donc un code d'accès particulier qu'il peut adresser au système grâce au clavier 17. Ce code d'accès a pour conséquence classique de déverrouiller la serrure 13. Ce même code est en outre reconnu par les moyens de calcul 30. Par ailleurs, le code de la personne qui occupe le local comporte une indication de la durée du séjour au-delà de laquelle le contrôle d'énergie pourra être ramené à un régime de veille, à consommation minimum. D'autres codes différents peuvent aussi permettre l'accès. Par exemple, un code peut être confié au gérant et un autre code peut être confié au personnel de nettoyage. Le code du gérant pourra par exemple renseigner les moyens de calcul 30 sur l'occupation ou la non-occupation de la chambre. Le code du personnel de nettoyage pourra renseigner sur le fait que la chambre vient d'être libérée, etc... Le code affecté au client pourra renseigner les moyens de calcul 30 sur le fait que le séjour est en cours (dès la première saisie du code). Par ailleurs, l'horloge H adresse en permanence aux moyens de calcul 30, des informations horaires permettant de déterminer si on se trouve dans une tranche horaire dite "creuse" ou dans une tranche horaire dite "pleine". La tranche horaire creuse est celle où les clients rentrent rarement à l'hôtel. La tranche horaire pleine est celle où les clients se présentent habituellement en grand nombre à l'hôtel. En outre, le transducteur 40 transmet aux moyens de calcul 30 une information représentative du fait que le client est effectivement présent dans sa chambre, puisqu'il a verrouillé la porte de l'intérieur. Tous ces paramètres sont gérés par l'unité de calcul 30 pour déterminer quatre régimes de fonctionnement différents, R1 à R4 des moyens de climatisation. Les régimes R1 à R4 impliquent, dans cet ordre, des consommations d'énergie croissantes. Le régime R4 est aussi appelé régime de fonctionnement nominal, comme indiqué précédemment. Les conditions de sélection d'un régime de fonctionnement sont indiquées, à titre d'exemple, dans le tableau ci-dessous.

| Conditions | - Pas de séjour en cours | - Séjour en cours - Client absent - Heures creuses | - Séjour en cours - Client absent - Heures pleines | - Séjour en cours - Client présent |
|---|---|---|---|---|
| R1 Veille | X | | | |
| R2 Puissance intermédiaire basse | | X | | |
| R3 Puissance intermédiaire haute | | | X | |
| R4 Pleine puissance, Fonctionnement nominal | | | | X |

Ainsi, on note que lorsque le séjour est en cours, (c'est-à-dire lorsque le code du client a bien été identifié) et que celui-ci est présent dans la chambre 11, on passe immédiatement au régime de fonctionnement nominal impliquant le maintien de la température dans des limites relativement étroites, déterminées par le client lui-même, au moyen d'un thermostat associé aux moyens de climatisation 18. Le client commande donc les moyens de climatisation par le verrouillage de la porte d'entrée de sa chambre. En même temps, les moyens de commande 20 permettent l'utilisation du réseau de distribution électrique 25 et l'utilisation de l'éclairage 26.

Les autres régimes de fonctionnement autorisent la température du local à évoluer dans des limites de plus en plus larges dépendant des échanges thermiques avec le milieu extérieur. Ces limites de température sont explicitées à la figure 2.

Sur cette figure, on a représenté en ordonnée, huit températures T1 à T8. En abscisse, la zone OA représente un fonctionnement des moyens de climatisation dans le premier régime de fonctionnement défini ci-dessus, c'est-à-dire celui qui implique une consommation d'énergie minimum. On voit que la température peut évoluer librement entre les températures T1 et T8. Ainsi, dans l'exemple représenté, la température représentée par la courbe T s'élève librement et est stabilisée à la température T8 par mise en oeuvre des moyens de refroidissement 18a. Entre les points A et B, on suppose que les conditions ont été modifiées et que le régime de fonctionnement sélectionné est le second régime de fonctionnement R2 dans lequel la température peut cette fois évoluer librement entre T2 et T7. Par conséquent, la température descend progressivement de T8 à T7 par mise en oeuvre des moyens de refroidissement 18a, puis se stabilise à T7. De B à C, le régime de fonctionnement est le troisième régime R3 indiqué ci-dessus où la température peut évoluer librement entre T3 et T6. Par conséquent, la température initialement à T7 diminue jusqu'à T6 et se stabilise ensuite à cette valeur. Au-delà de C, les paramètres ont changé et notamment la fermeture intérieure de la serrure témoigne du fait que le client est présent dans sa chambre et, dans ce cas, la température peut être choisie librement par le client à n'importe quelle valeur dans l'intervalle T1-T8, par exemple. On suppose donc que celui-ci règle le thermostat des moyens de climatisation à la valeur T5. Par conséquent, la température qui était à T6 diminue à nouveau par mise en oeuvre des moyens de refroidissement 18a jusqu'à se stabiliser à T5. Cependant, le régime de fonctionnement nominal comporte aussi une possibilité de modification automatique de la température de consigne, en fonction de l'heure. Typiquement, il est prévu que la température affichée au thermostat soit effectivement la température de consigne au voisinage de laquelle la température du local va se stabiliser mais seulement pendant une première tranche horaire. Pendant une seconde tranche horaire (par exemple au cours de la nuit) le système est programmé pour abaisser automatiquement la température de consigne à une valeur donnée en-dessous de la valeur de consigne programmée, par exemple T4. C'est ce qui est illustré au-delà du point D où le régime de fonctionnement nominal modifie de façon autonome la température de consigne qui passe de T5 à T4. La température du local se stabilise donc à T4 pendant la nuit avant de revenir automatiquement à T5 au matin.

Bien entendu, l'exemple qui vient d'être décrit en référence à la figure 2 est celui qui correspond à une température extérieure élevée (été) et où les moyens de climatisation sont mis en oeuvre pour refroidir la température du local. En hiver, la température du local pourra descendre jusqu'à T1 lorsque la chambre n'est pas occupée et s'élever jusqu'à une valeur choisie par le client lorsqu'un séjour est en cours et que le client est présent dans la chambre.

Il est à noter que les seuils de température T1, T2, T3, T6, T7, T8 sont fixés librement par le personnel chargé de la gestion du local, selon les besoins du local. La température T5 (et par conséquent T4) est fixée par le client dans tout l'intervalle possible T1-T8 ou dans un autre intervalle plus restreint. Les tranches horaires dites heures pleines et heures creuses et lesdites première et seconde tranches horaires sont aussi déterminées librement.

## Revendications

1. Installation de contrôle d'accès et de gestion d'énergie dans un local (11) comportant: une serrure (13) commandant l'entrée dudit local, des moyens de climatisation (18) dudit local, des moyens de commande de climatisation (20) pilotant lesdits moyens de climatisation, des moyens de calcul (30) d'un régime de fonctionnement pilotant lesdits moyens de commande (20) et comprenant en plus des moyens d'élaboration (40) d'un signal ou code représentatif du fait que ladite serrure est verrouillée de l'intérieur, caractérisée en ce que ladite serrure (13) est du type à code d'accès associée à des moyens de saisie de code (16) accessibles de l'extérieur dudit local (11) et susceptibles de piloter ladite serrure (13) au moins à l'ouverture, en ce que lesdits moyens de calcul (30) sont adaptés à placer lesdits moyens de commande (20) dans un régime de fonctionnement sélectionné parmi au moins trois régimes prédéterminés dont un régime de fonctionnement nominal, en ce qu'une entrée de donnée (42) desdits moyens de calcul est reliée auxdits moyens d'élaboration (40) d'un signal ou code représentatif et en ce qu'une autre entrée de donnée (44) desdits moyens de calcul est reliée auxdits moyens de saisie de code (16), ledit régime de fonctionnement nominal n'étant sélectionné que lorsque lesdits moyens d'élaboration (40) délivrent ledit signal ou code représentatif.

2. Installation selon la revendication 1, caractérisée en ce qu'une entrée de donnée (46) desdits moyens de calcul (30) est reliée à une horloge (H).

3. Installation selon l'une des revendications précédentes, caractérisée en ce que lesdits moyens de commande de climatisation (20) comportent une entrée de donnée (22a) connectée à une sonde de température ambiante (22) placée dans ledit local.

4. Installation selon l'une des revendications précédentes, caractérisée en ce que les moyens de calcul (30) dudit régime de fonctionnement sont placés près de l'entrée dudit local tandis que les moyens de commande de climatisation (20) sont placés à distance desdits moyens de calcul, de préférence près des moyens de climatisation (18).

5. Installation selon la revendication 4, caractérisée en ce qu'elle comporte des moyens de liaison infrarouge (34, 36) entre lesdits moyens de calcul (30) et lesdits moyens de commande (20).

6. Installation selon l'une des revendications précédentes, caractérisée en ce que le code lu par lesdits moyens de saisie (16) contient des informations représentatives de l'occupant ou du détenteur du code.

7. Installation selon l'une des revendications précédentes, caractérisée en ce qu'elle est autonome et entièrement mise en place dans ledit local.

## Patentansprüche

1. Anordnung zum Kontrollieren des Zutritts zu und der Steuerung der Energie in einer Räumlichkeit (11), welche umfaßt: eine Verschließeinrichtung (13), welche den Zutritt zu der Räumlichkeit bestimmt; Mittel (18) zur Klimatisierung der Räumlichkeit; Betätigungsmittel (20) für die Klimatisierung, welche die Klimatisierungsmittel vorsteuern; Mittel (30) zum Berechnen der Betriebsverhältnisse, welche die Betätigungsmittel (20) vorsteuern; sowie Mittel (40) zum Erzeugen eines Signals oder Codes, der für die Tatsache repräsentativ ist, daß die Verschließeinrichtung vom Inneren versperrt ist; dadurch gekennzeichnet, daß die Verschließeinrichtung (13) vom Zutritts-Codetype ist, der Mitteln (16) zum Erfassen des Codes zugeordnet ist, die von außerhalb der Räumlichkeit (11) zugänglich und geeignet sind, die Verschließeinrichtung (13) wenigstens beim Öffnen vorzusteuern; daß die Rechnermittel (30) so ausgebildet sind, daß sie die Betätigungsmittel (20) in einen unter wenigstens drei vorbestimmten Funktionszuständen ausgewählten Funktionszustand versetzen, von denen einer von nominaler Funktion ist; daß ein Eingang (42) für Werte der Rechnermittel mit den Mitteln (40) zum Erzeugen eines repräsentativen Signals oder Codes verbunden ist und ein anderer Eingang (44) für Werte der Rechnermittel mit den Mitteln (16) zum Erfassen des Codes verbunden ist, wobei der nominale Funktionszustand nur ausgewählt ist, wenn die Erzeugungsmittel (40) das repräsentative Signal oder Code liefern.

2. Anordnung nach Anspruch 1, dadurch gekennzeichnet, daß ein Eingang (46) für Werte der Rechnermittel mit einer Uhr (H) verbunden ist.

3. Anordnung nach einem der voranstehenden Ansprüche, dadurch gekennzeichnet, daß die Betätigungsmittel (20) für die Klimatisierung einen Werteeingang (22a) aufweisen, der mit einer Sonde (22) für die Umgebungstemperatur verbunden ist, welche Sonde in der Räumlichkeit angeordnet ist.

4. Anordnung nach einem der voranstehenden Ansprüche, dadurch gekennzeichnet, daß die Berechnungsmittel (30) des genannten Funktionszustandes nahe dem Eingang der Räumlichkeit angeordnet sind, während die Betätigungsmittel (20) für die Klimatisierung im Abstand von den Berechnungsmitteln angeordnet sind, vorzugsweise nahe den Mitteln (18) für die Klimatisierung.

5. Anordnung nach Anspruch 4, dadurch gekennzeichnet, daß sie Mittel (34,36) für eine Infrarot-Verbindung aufweist, und zwar zwischen den Berechnungsmitteln (30) und den Betätigungsmitteln (20).

6. Anordnung nach einem der voranstehenden Ansprüche, dadurch gekennzeichnet, daß der Code, der von den Mitteln (16) zum Erfassen des Codes ausgelesen wird, Informationen enthält, die für den Besitzer oder Inhaber des Codes repräsentativ sind.

7. Anordnung nach einem der voranstehenden Ansprüche, dadurch gekennzeichnet, daß sie autonom und vollständig in der Räumlichkeit angebracht ist.

## Claims

1. Installation for access control and energy management in a room (11) comprising: a lock (13) for controlling the entrance to said room, air-conditioning means (18) for said room, air-conditioning control means (20) for pilot control of said air-conditioning means, calculating means (30) for calculating an operating condition for pilot control of said control means (20) and further comprising means (40) for producing a signal or code representative of the fact that said lock is locked from the interior characterised in that said lock (13) is of the access code type and associated with code seizing means (16) which are accessible from the exterior of said room (11) and which are capable of providing pilot control for said lock (13) at least for opening, that said calculating means (30) are adapted to put said control means (20) in an operating condition selected from at least three predetermined conditions including a nominal operating condition, that a data input (42) of said calculating means is connected to said means (40) for producing a representative signal or code and that another data input (44) of said calculating means is connected to said code seizing means (16), said nominal operating condition being selected only when said signal production means (40) deliver said representative signal or code.

2. An installation according to claim 1 characterised in that a data input (46) of said calculating means (30) is connected to a clock (H).

3. An installation according to one of the preceding claims characterised in that said air-conditioning control means (20) comprise a data input (22a) connected to an ambient temperature probe (22) disposed in said room.

4. An installation according to one of the preceding claims characterised in that the calculating means (30) for calculating said operating condition are disposed close to the entrance of said room while the air-conditioning control means (20) are disposed at a distance from said calculating means, preferably close to the air-conditioning means (18).

5. An installation according to claim 4 characterised in that it comprises infra-red connecting means (34, 36) between said calculating means (30) and said control means (20).

6. An installation according to any one of the preceding claims characterised in that the code read by said seizing means (16) contains items of information which are representative of the occupant or the holder of the code.

7. An installation according to one of the preceding claims characterised in that it is autonomous and entirely disposed in said room.
